# DEMANDE DE BREVET EUROPEEN

(11) **EP 1 462 689 A1**
(43) Date de publication de la demande: **29.09.2004**
(21) Numéro de dépôt: 03075884.1
(22) Date de dépôt: 26.03.2003
(51) Int. Cl.: F16K 1/30, F16K 35/02

(54) **Robinet pour bouteille de gaz**

(71) Demandeur: Luxembourg Patent Company S.A., 7505 Lintgen (LU)
(72) Inventeur: Kremer, Paul, 7263 Walferdange (LU); Schmit, Jacques, 8268 Mamer (LU)
(74) Mandataire: Weydert, Robert

(57) **Abrégé**

Le robinet pour bouteille de gaz comporte un volant (2) monté sur une tige de commande (3). Le volant (2) est déplaçable sur la tige de commande (3) en direction de l'axe longitudinal de la tige entre une première position couplée à la tige en vue de l'actionner et une deuxième position découplée de la tige, dans laquelle le volant (2) peut tourner librement à vide sur la tige (3) sans causer un mouvement de rotation de celle-ci.

## Description

La présente invention concerne un robinet pour bouteille de gaz comportant une tige de commande rotative en vue d'actionner un élément de fermeture ou d'ouverture, et un volant de commande en vue de tourner la tige de commande pour ouvrir ou fermer le robinet.

Pour soulever et transporter une bouteille de gaz la bouteille est normalement saisie par le volant du robinet ce qui risque d'ouvrir le robinet accidentellement et peut causer un soutirage non-désiré du gaz renfermé dans la bouteille.

La présente invention a pour objet de remédier à ce désavantage.

Pour résoudre cet objet de l'invention, le robinet pour bouteille de gaz du type cité ci-avant est caractérisé en ce que le volant de commande est axialement mobile sur la tige de commande entre une première position axiale dans laquelle le volant de commande et la tige de commande sont couplés ensemble de sorte qu'un mouvement de rotation du volant de commande entraîne un mouvement de rotation correspondant de la tige de commande et une seconde position axiale dans laquelle le volant et la tige de commande sont découplés l'un de l'autre et le volant peut tourner à vide sur la tige sans causer un mouvement de rotation de celle-ci, et en ce qu'un moyen de retenue élastique encliquetable est prévu entre le volant et la tige en vue de retenir le volant de façon élastique dans l'une ou l'autre de ces deux positions sur la tige, le volant étant déplacable axialement sur la tige entre ses deux positions axiales par l'application d'une force axiale prédéterminée au volant en vue de surmonter la force de retenue du moyen de retenue élastique.

Le volant de commande a une partie interne non-circulaire, de préférence hexagonale, et la tige de commande a une partie externe de forme géométrique correspondante. Dans la première position du volant ces deux parties sont engagées l'une avec l'autre, c'est-à-dire le volant et la tige sont mécaniquement couplés ensemble en vue de la transmission d'un couple de rotation du volant à la tige, et dans la seconde position du volant la partie interne, non-circulaire du volant est axialement dégagée de la partie externe, non-circulaire, de la tige, c'est-à-dire le volant est découplé de la tige et peut tourner à vide sur celle-ci, empêchant la transmission d'un couple de commande du volant à la tige.

Selon un mode d'exécution avantageux le moyen de retenue élastique encliquetable comporte deux rainures circonférentielles espacées axialement l'une de l'autre et formées sur la surface circonférentielle externe de la tige, et une ou plusieurs goupilles logées dans un ou plusieurs trous radiaux du volant de commande et sollicitées radialement vers l'intérieur par un anneau élastique porté par le volant de commande en vue de retenir le volant élastiquement dans l'une ou l'autre position sur la tige de commande. L'anneau élastique est de préférence une bague torique en matière élastomère disposée dans une rainure circonférentielle pratiquée dans la surface externe du volant de commande.

Des moyens formant butées peuvent être prévus pour limiter le déplacement axial du volant de commande par rapport à la tige dans les deux sens au-delà de la première position axiale et au-delà de la seconde position axiale. Une vis de retenue empêche la séparation axiale du volant de la tige de commande.

L'invention sera maintenant expliquée en plus grand détail en référence aux dessins, sur lesquels.
La figure 1 est une vue en élévation de la partie supérieure d'un robinet pour bouteille de gaz, selon la présente invention ;
La figure 2 est une vue en coupe axiale agrandie de la partie supérieure du robinet selon les lignes A-A de la figure 1 et montre le volant du robinet couplé à la tige du robinet ;
La figure 3 est une vue semblable à la figure 2 mais montrant le volant dans sa position découplée de la tige du robinet ; et
La figure 4 est une vue en coupe transversale le long des lignes B-B de la figure 1.

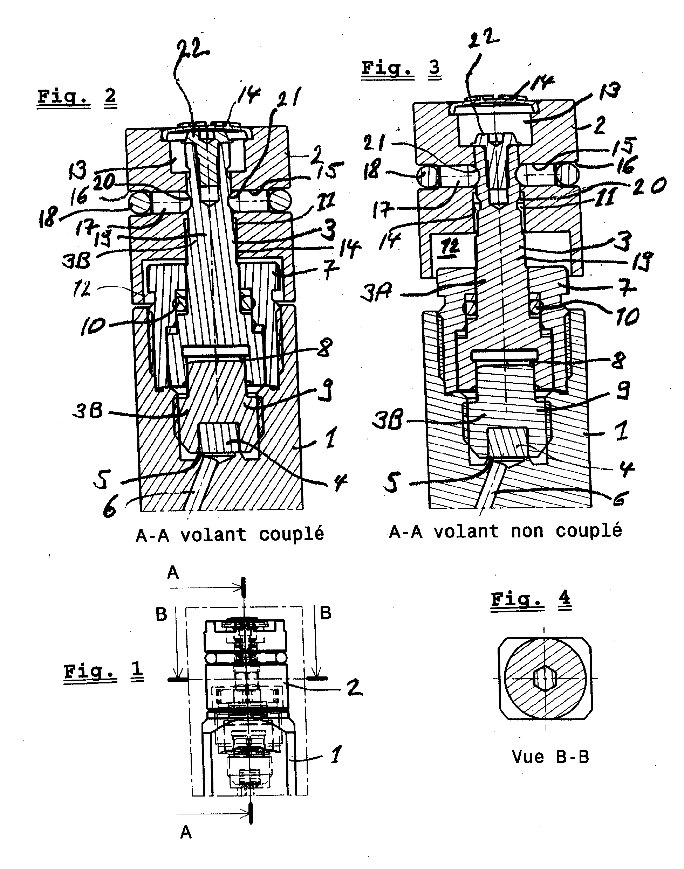

L'invention sera maintenant décrite en plus grand détail en référence aux figures 1 à 4. L'invention a été conçue particulièrement pour un robinet pour bouteille de gaz médical, mais l'invention n'est pas limitée à un tel robinet et peut trouver application dans n'importe quel robinet servant à ouvrir ou fermer un passage ou un conduit de gaz ou de liquide.

Comme représenté sur les figures 2 et 3 le robinet comporte un corps de robinet 1 et un volant de commande 2 monté autour d'une tige de commande 3 ayant une partie supérieure 3A et une partie inférieure 3B. La partie inférieure 3B de la tige 3 est pourvue d'une garniture de siège 4 qui, dans la position fermée du robinet, engage de façon étanche une surface de siège 5 du corps de robinet A. Dans la position ouverte du robinet la garniture de siège 4 du robinet est écartée de la surface de siège 5 et le fluide peut circuler entre un passage 6 du corps 1 et un autre passage du corps (non-représenté).

La tige de commande 3 est retenue dans le corps 1 du robinet au moyen d'une étoupe 7 vissée dans un alésage fileté du corps 1. La partie supérieure 3A de la tige de commande 3 est pourvue à son extrémité inférieure d'un évidement de forme carrée 8 qui engage une partie supérieure de forme carrée 9 de la partie inférieure 3B de la tige de commande 3. La partie supérieure 3A de la tige de commande 3 est logée pour rotation dans l'étoupe 7 et une bague d'étanchéité 10 est prévue entre la partie supérieure 3A de la tige de commande 3 et l'étoupe 7. La partie inférieure 3B de la tige de commande 3 est vissée dans un autre alésage fileté du corps 1 du robinet. L'on comprendra que par un mouvement de rotation appliqué à la tige de commande 3 dans l'une ou l'autre direction. La garniture de siège 4 peut être déplacée dans l'un sens ou dans l'autre par rapport à la surface de siège 5 du corps 1 en vue d'ouvrir et de fermer le robinet.

La tige de commande 3 peut être tournée dans l'un ou dans l'autre sens par le volant de commande 2 qui a une forme généralement cylindrique pourvue d'un passage central longitudinal 11 à différents diamètres.

Le passage central longitudinal 11 comporte à son extrémité inférieure un contre-alésage à grand diamètre formant une cavité inférieure 12 qui entoure une partie supérieure de l'étoupe 7. A son extrémité supérieure le passage central 11 comporte un contre-alésage de plus petit diamètre formant une cavité supérieure 13 fermée par une cape 14 en matière plastique.

Entre les deux contre-alésages 12 et 13 le passage central longitudinal 11 a une partie de forme non-circulaire 14, de préférence hexagonale, juste au-dessus de la cavité inférieure 12. Le reste du passage central longitudinal 11 s'étendant de la partie non-circulaire 14 vers et jusqu'à la cavité supérieure 13 est cylindrique. Un ou plusieurs trous radiaux 15 sont formés dans le volant de commande 2 au-dessus de la partie non-circulaire 14 et débouchent à l'intérieur dans la partie cylindrique du passage central longitudinal 11 au-dessous de la cavité supérieure 13 et à l'extérieur dans une rainure circonférentielle 16 pratiquée dans la surface circonférentielle externe du volant de commande 2.

Dans chaque trou radial 15 se trouve une goupille radiale 17 qui est sollicitée radialement vers l'intérieur au moyen d'un anneau élastique 18, de préférence une bague torique en matière élastomère, reçue dans la rainure circonférentielle 16 du volant 2.

Le volant de commande est monté sur la partie supérieure 3A de la tige de commande 3. La partie supérieure 3A de cette tige de commande 3 est pourvue d'une partie de surface externe non-circulaire 19, de préférence hexagonale, ayant une forme géométrique correspondant à la forme géométrique de la partie interne non-circulaire 14 du volant de commande 2. Entre la partie interne non-circulaire 14 et la cavité supérieure 13 le diamètre interne du passage central longitudinal est approximativement égal ou légèrement plus grand que le diamètre externe de la tige de commande 3 au-dessus de la partie externe non-circulaire 19. Au-dessus de sa partie de forme hexagonale 19 la partie supérieure 3A de la tige de commande 3 est généralement cylindrique jusqu'à son extrémité supérieure. Cette partie cylindrique est pourvue de deux rainures circonférentielles 20, 21 écartées l'une de l'autre en direction longitudinale de la tige 3.

Une vis 22 est engagée dans l'extrémité supérieure de la partie supérieure 3A de la tige de commande 3 et la tête de cette vis 22 est pourvue d'un flasque qui s'étend radialement au-delà du diamètre externe de l'extrémité supérieure de la partie supérieure 3A de la tige de commande 3 et le diamètre externe de ce flasque est plus grand que le diamètre interne du passage central longitudinal 3 à proximité de la cavité supérieure 13.

Le fonctionnement du robinet est comme suit : le volant de commande 2 a une première position inférieure (figures 1, 2 et 4) dans laquelle la partie interne non-circulaire 14 du volant de commande 2 est engagé sur et entoure la partie non-circulaire externe 19 de la tige de commande 3 qui sont donc mécaniquement couplées ensemble en vue de la transmission d'un couple de rotation du volant 2 à la tige 3 pour ouvrir ou fermer le robinet par rotation du volant de commande 2. Dans cette première position inférieure du volant 2 les goupilles 17 sont maintenues en engagement avec la rainure circonférentielle inférieure 20 de la tige 3 au moyen de l'anneau élastique 18. Le volant de commande 2 peut être déplacé verticalement vers le haut et axialement le long de la tige de commande 3 de sa première position inférieure vers une seconde position supérieure dans laquelle la partie interne non-circulaire 14 du volant 2 est dégagée de la partie non-circulaire externe 19 de la tige de commande 3, tel que représenté sur la figure 3. Dans cette seconde position supérieure les goupilles 17 sont maintenant engagées dans la rainure supérieure 21 de la tige de commande. Dans cette position supérieure du volant 2 celui-ci peut tourner librement ou à vide sur la tige de commande 3 sans provoquer un mouvement de rotation de celle-ci.

L'anneau élastique 18, les goupilles radiales 17 et les rainures circonférentielles 20 et 21 forment un moyen de retenue élastique encliquetable entre le volant 2 et la tige 3 en vue de retenir le volant 2 de façon élastique dans l'une ou l'autre de ces deux positions de la tige 3, le volant 2 étant axialement déplaçable sur la tige 3 entre ces deux positions axiales par l'application d'une force axiale prédéterminée au volant 2 en vue de surmonter la force de l'anneau de retenue élastique 18. Le déplacement axial du volant 2 de l'une de ces deux positions sur la tige 3 vers son autre position causant le dégagement radial des goupilles 17 de l'une des deux rainures 20, 21 contre la force élastique de l'anneau 18, et ensuite l'engagement radial de ces goupilles 17 dans l'autre rainure sous l'effet de l'élasticité de l'anneau 17.

Des moyens formant butées sont prévus pour limiter le déplacement axial du volant 2 sur la tige 3 dans les deux sens. Le déplacement du volant 2 vers le haut au-delà de la première position et la séparation du volant 2 de la tige de commande 3 est empêché par le flasque radial de la vis 22 qui engage le fond de la cavité supérieure 13 dans la seconde position supérieure non-couplée du volant de commande 2. Le mouvement axial du volant 2 sur la tige de commande 3 dans l'autre sens vers le bas au-delà de la seconde position est limité par l'engagement de la surface de fond de la cavité inférieure 12 avec la surface supérieure de l'étoupe 17 ou bien par l'engagement de l'extrémité inférieure du volant de commande 2 avec l'extrémité supérieure du corps 1 du robinet.

L'invention n'est pas limitée au mode d'exécution représenté sur les dessins annexés et beaucoup de modifications peuvent y être apportées sans pour cela quitter la portée des revendications annexées. Une seule goupille radiale 17 peut être suffisante pour retenir le volant 2 élastiquement dans l'une ou l'autre de ces deux positions, mais cependant l'on peut aussi prévoir deux, trois ou quatre de ces goupilles 17. L'anneau élastique, au lieu d'être fabriqué en matière élastomère, peut être un anneau élastique formé d'un fil métallique enroulé hélicoïdalement. En outre, au lieu des goupilles 17 et de l'anneau élastique 18 portés par le volant 2, le moyen de retenue élastique encliquetable peut être prévu dans la tige de commande 3 et la ou les goupilles peuvent être forcées par un moyen élastique vers l'extérieur en vue de s'engager dans l'une ou l'autre des deux rainures circonférentielles formées dans la surface du passage central longitudinal du volant de commande 2. Aussi, la vis 22 formant butée en vue de retenir le volant de commande 2 sur la tige de commande 3 peut être remplacée par un anneau fendu élastique monté dans une rainure circonférentielle de la tige de commande 3. D'autres modifications peuvent être apportées par le spécialiste au mode d'exécution décrit ci-avant.

## Revendications

1. Robinet pour bouteille de gaz comportant une tige de commande rotative en vue d'actionner un élément de fermeture ou d'ouverture, et un volant de commande en vue de tourner la tige de commande pour ouvrir ou fermer le robinet, **caractérisé en ce que** le volant de commande est axialement mobile sur la tige de commande entre une première position axiale dans laquelle le volant de commande et la tige de commande sont couplés ensemble de sorte qu'un mouvement de rotation du volant de commande entraîne un mouvement de rotation correspondant de la tige de commande et une seconde position axiale dans laquelle le volant et la tige de commande sont découplés l'un de l'autre et le volant peut tourner à vide sur la tige sans causer un mouvement de rotation de celle-ci, et **en ce qu'**un moyen de retenue élastique encliquetable est prévu entre le volant et la tige en vue de retenir le volant de façon élastique dans l'une ou l'autre de ces deux positions sur la tige, le volant étant déplacable axialement sur la tige entre ses deux positions axiales par l'application d'une force axiale prédéterminée au volant en vue de surmonter la force de retenue du moyen de retenue élastique.

2. Robinet selon la revendication 1, **caractérisé en ce que** le volant de commande a une partie interne non-circulaire, de préférence hexagonale, et la tige de commande a une partie externe de forme géométrique correspondante, la partie interne du volant étant reçue dans la première position axiale du volant autour de ladite partie externe de la tige, et engagée avec celle-ci, en vue de la transmission d'un couple de rotation du volant à la tige, et les deux parties étant axialement dégagées l'une de l'autre dans la seconde position axiale du volant.

3. Robinet selon la revendication 1 ou 2, **caractérisé en ce que** le moyen de retenue élastique encliquetable comporte deux rainures circonférentielles axialement écartées l'une de l'autre sur la surface circonférentielle externe de la tige, et au moins une goupille montée dans un trou radial du volant de commande, cette goupille étant sollicitée, par un anneau élastique porté par le volant, radialement vers l'intérieur en vue de s'engager dans l'une ou l'autre desdites rainures en vue de retenir le volant de façon élastique dans l'une ou l'autre de ces positions axiales, le déplacement axial du volant de l'une de ces deux positions sur la tige vers son autre position causant le dégagement radial de la goupille de l'une des deux rainures contre la force élastique de l'anneau précité et ensuite l'engagement radial de la gouoille dans l'autre rainure sous l'effet de l'élasticité de cet anneau.

4. Robinet selon la revendication 3, **caractérisé en ce que** le trou radial de réception de la goupille pratiqué dans le volant de commande débouche à l'extérieur dans une rainure annulaire pratiquée dans la circonférence externe du volant et dans laquelle l'anneau élastique est disposé.

5. Robinet selon la revendication 3 ou 4, **caractérisé en ce que** l'anneau élastique est une bague torique en matière élastomère.

6. Robinet selon l'une quelconque des revendications 3 à 5, **caractérisé en ce que** plusieurs goupilles sont prévues équidistantes l'un de l'autre en direction circonférentielle du volant de commande.

7. Robinet selon l'une quelconque des revendications 1 à 6, **caractérisé en ce que** des moyens formant butées sont prévus pour limiter le déplacement axial du volant sur la tige dans les deux sens au-delà de la première position et au-delà de la seconde position.

8. Robinet selon l'une quelconque des revendications précédentes, **caractérisé en ce qu'**un moyen formant butée est prévu pour empêcher la séparation du volant de la tige de commande.
